# EUROPEAN PATENT APPLICATION

(11) **EP 2 995 435 A1**
(43) Date of publication of application: **16.03.2016**
(21) Application number: 14795403.6
(22) Date of filing: 02.05.2014
(51) Int. Cl.: B28D 1/06, B28D 1/12, B23D 49/06

(54) **CUTTING TOOL AND CUTTING APPARATUS COMPRISING SAME**

(30) Priority: 06.05.2013 KR 20130050706
(71) Applicant: Ehwa Diamond Ind. Co. Ltd., Gyeonggi-do 447-804 (KR)
(72) Inventor: PARK, Hee-Dong, Yongin-si Gyeonggi-do 446-778 (KR); KIM, Nam-Kwang, Cheongju-si Chungcheongnam-do 28650 (KR)
(74) Representative: Nederlandsch Octrooibureau
(86) International application number: PCT/KR2014/003970
(87) International publication number: WO 2014/182024

(57) **Abstract**

A cutting tool and a cutting apparatus comprising the same are disclosed. A cutting tool according to an aspect of the present invention comprises: a blade extending in the longitudinal direction of a workpiece and being adapted to reciprocate so as to cut the workpiece; at least one cutting tip provided in one end of the blade, the cutting tip being formed to be projected in the width direction of the blade such that the workpiece is cut when the cutting tip comes into contact with the workpiece; and a cutting assistance unit provided in at least one side of the blade, the cutting assistance unit being formed correspondingly to the width of the cutting tip so as to prevent an undesirable movement of the blade within a cutting space formed by the cutting tip. The cutting apparatus comprising the cutting tool comprises: a frame unit provided in both sides of the cutting direction of the workpiece; and the cutting tool provided in one side of the frame unit to be reciprocatable by power transmitted from a driving unit so as to cut the workpiece.

## Description

### [Technical Field]

The present disclosure relates to a cutting apparatus configured to cut or form holes in brittle workpieces such as stone, bricks, concrete, or asphalt, and more particularly, to a cutting tool for cutting stones such as marble or granite using a reciprocating multi-blade frame gang saw and a cutting apparatus including the cutting tool.

### [Background Art]

Generally, cutting apparatuses include cutting tips that contain an abrasive and are used to cut workpieces, and a body (core) to which the cutting tips are fixed.

Cutting apparatuses having different structures are used according to conditions such as the shapes or materials of workpieces to be cut. For example, bodies of cutting apparatuses are usually disk-shaped. However, bodies of some cutting apparatuses have a linear shape like a frame gang saw.

A frame gang saw, an example of a cutting apparatus used to cut stone, includes a frame and a plurality of linear bodies attached to the frame, and tension is applied to the linear bodies to maintain the linearity of the linear bodies.

Such frame gang saws have been widely used for cutting large workpieces such as large blocks of concrete, marble, granite, sandstone, or limestone, into thin slabs. A common cutting method using a frame gang saw is to cut a workpiece while spraying an abrasive such as granular steel shots on the frame gang saw.

Recent frame gang saws include abrasive-containing cutting tips fixed to bodies, and techniques for cutting workpieces using the frame gang saws have been developed.

In addition to frame gang saws, other tools such as large circular saw blades, wire saws, or band saws are used for cutting large workpieces.

Large circular saws are disk-shaped, and thus guarantee rapid and stable cutting. Such a large circular saw may include a plurality of bodies to simultaneously cut a workpiece into a plurality of slabs. When cutting thick workpieces, a circular saw having a large disk-shaped body may be used. In this case, the thickness of the disk-shaped body may also have to be increased for the stability of the disk-shaped body, and thus the size of an entire system may be inevitably increased. This increases the loss of workpieces and manufacturing costs.

In general, wire saws have been widely used for quarrying stones. Recently, wire saws for cutting quarried stone into slabs have been under development. However, processes of cutting stone with a wire saw result in high production costs and a large amount of workpiece loss, and thus applications thereof are limited.

Frame gang saws have been widely used for cutting large blocks of stone without limitation related to the size of workpieces because bodies (hereinafter, bodies may be referred to as blades) of frame gang saws can be inserted into workpieces.

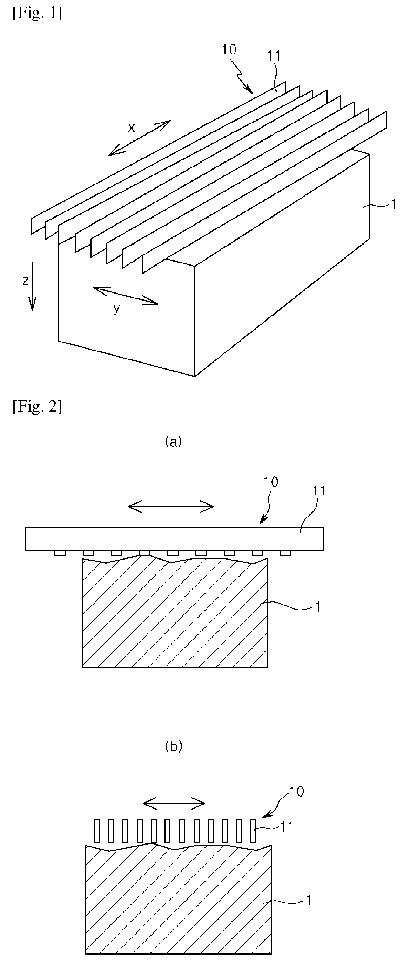

Referring to FIGS. 1, 2A, and 2B, a cutting tool such as a frame gang saw 10 may include many blades 11, for example, 250 blades, and each blade 11 has a length of 3 m or more, a thickness of 3 mm to 5 mm, and a height of 50 mm to 250 mm.

The frame gang saw 10 may cut a block 1 of granite or marble into slabs, and the slabs may be polished as final products such as tiles or blocks. If the thickness deviation of a slab is less than 1.5 mm, the slab is considered to be sufficiently flat. If the thickness deviation of a slab is 2 mm or less, the slab is considered to have an allowable thickness deviation.

When granite or marble is cut using the blades 11, the blades 11 have to be maintained in vertical paths in order to obtain final granite or marble products satisfying the above-mentioned quality requirements.

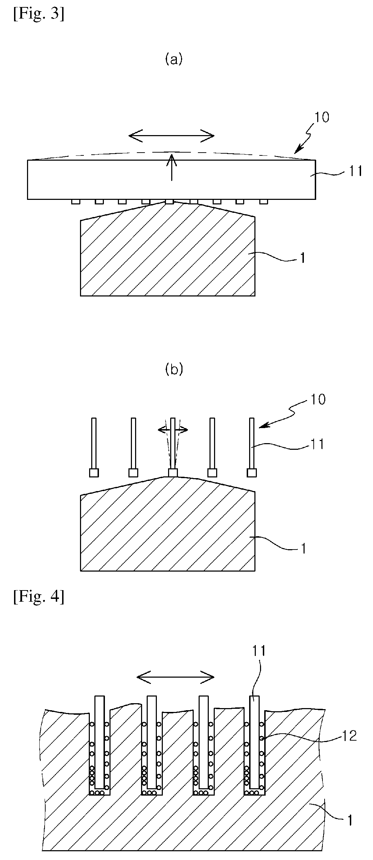

Referring to FIGS. 3A to 5, however, when a block 1 is cut with the blades 11, if the blades 11 are twisted or bent due to a force locally applied to the blades 11, the blades 11 may depart from vertical paths (that is, straight paths), slabs having a thickness deviation outside an allowable range may be produced. In this case, the slabs may be discarded as defective slabs. In addition, the blades 11 undergoing deformation may be buckled, broken, worn, or permanently damaged, and thus the lifespans of the blades 11 may be shortened.

One of reasons causing local forces on the blades 11 and making the blades 11 depart from straight paths is the inhomogeneity of workpiece blocks. Basically, quarry stone blocks 1 have internal defects. In addition to internal defects, quarry stone blocks 1 may also have uneven surfaces due to drill holes formed during a mining process or other impacts applied to the quarry stone block 1. Furthermore, when a quarry stone block 1 is cut with the blades 11, the blades 11 may receive largely varying forces due to the inhomogeneity of the workpiece (quarry stone block 1). Thus, the blades 11 may be persistently worn and depart from designated paths.

Referring to FIGS. 2A to 3B, when the blades 11 are initially lowered to cut a block 1 (quarry stone block), the blades 11 are partially brought into contact with the block 1 because the surface of the block 1 is uneven. That is, only some regions of some of the blades 11 may be brought into contact with the block 1, and thus the blades 11 may undergo the above-mentioned problems. To minimize these problems, generally, the blades 11 are lowered at a very low speed to reduce loads acting on the blades 11, and after the blades 11 are inserted into the block 1 to a certain extent and all the blades 11 are in contact with the block 1, the cutting speed of the blades 11 is gradually increased.

However, according to such a cutting method, too much time is taken at the initial stage of cutting, and problems caused by non-uniform loads acting on the blades 11 are not completely solved.

In a process of cutting quarry stones such as granite into slabs, the ratio of defective slabs to non-defective slabs is high because of inevitable defects of the quarry stones and existing technical problems of a cutting system, and cutting equipment such as blades are increasingly damaged, thereby increasing maintenance and repair costs. Therefore, there is a need for a technique for easily cutting quarry stones such as granite or marble, improving the performance of blades, and decreasing equipment maintenance and repair costs.

Furthermore, in the case of a cutting tool 10 of the related art using steel shots as illustrated in FIG. 4, even though blades 11 depart from their original positions while making contact with a workpiece 1, the blades 11 may easily return to their original positions, for example, by the resilience of the blades 11 because gaps are formed between the blades 11 and the workpiece 1, and thus the blades 11 are not tightly restricted in the workpiece 1.

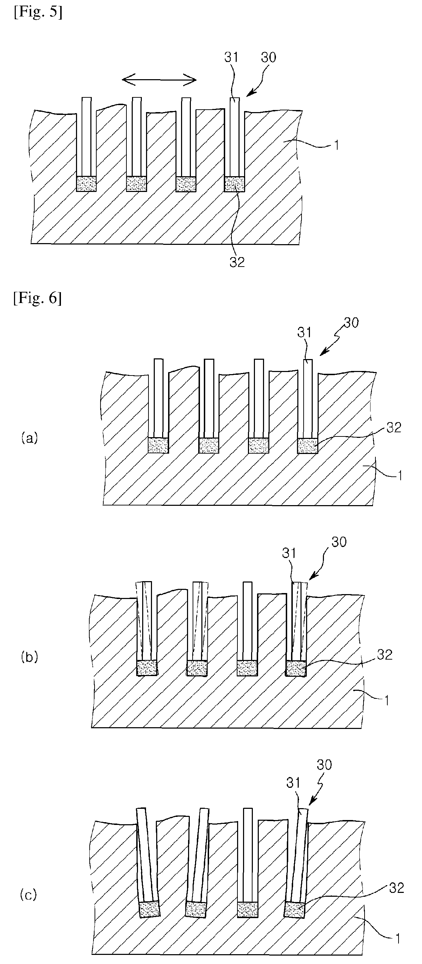

In another cutting tool 10 of the related art illustrated in FIG. 5, cutting tips 32 are attached to blades 31.

However, when a workpiece 1 is cut with the cutting tool 30 including the cutting tips 32, the cutting tips 32 are restricted on both sides by the workpiece 1 as shown in FIG. 6A.

In this case, for example, if the cutting tool 30 is impacted and stress is locally formed in the cutting tool 30, the blades 31 may be inclined or bent as illustrated in FIG. 6B, and in this state, the blades 31 may cut the workpiece 1.

Therefore, after the workpiece 1 is cut to some degree using the inclined or bent blades 31 of the cutting tool 30, since the cutting tips 32 are restricted on both sides by the workpiece 1, the blades 31 may not easily return to their original positions or shapes by the resilience of the blades 31. Therefore, cutting of the workpiece 1 may be continued in a state in which the cutting tips 32 are inclined and restricted by the workpiece 1, and thus the amount of cutting error may increase.

This kind of cutting error of workpieces may deteriorate the cutting quality of the workpieces, and if the cutting error is significant, the value of products produced by cutting the workpieces may be reduced. In addition, for example, the deformation of the workpieces may increase, and thus the durability of the workpieces may be decreased. In this case, a cutting tool may have to be replaced with a new one, and a maintenance/repair operation may have to be performed more frequently on a cutting apparatus to which the cutting tool is attached.

### [Disclosure]

### [Technical Problem]

An aspect of the present disclosure may provide a cutting tool and a stone cutting apparatus including the cutting tool, the cutting tool being configured to prevent inclining of blades when cutting large blocks (workpieces) of stone or other materials using a frame gang saw, thereby maintaining the blades in a vertical direction and preventing the blades from departing from cutting paths even if the workpieces are not homogeneous or cutting tips of the blades are not uniform.

An aspect of the present disclosure may also provide a cutting tool and a stone cutting apparatus including the cutting tool, the cutting tool including blades configured to be restricted on upper and lower sides thereof by a workpiece so as to minimize the deformation of the blades and to cut the workpiece straight in order to obtain high-quality products.

An aspect of the present disclosure may also provide a cutting tool and a cutting apparatus including the cutting tool, blades of the cutting tool being configured to receive a uniform load and undergo less deformation in order to increase the lifespan of the blades.

An aspect of the present disclosure may also provide a cutting tool and a stone cutting apparatus, the cutting tool being configured to prevent non-uniform abrasion of diamond-containing cutting tips of a reciprocating multi-blade frame gang saw by reducing or preventing the deformation of blades, thereby improving the quality of cut surfaces of a workpiece and increasing the lifespan of the frame gang saw by causing the cutting tips to undergo uniform abrasion.

### [Technical Solution]

According to an aspect of the present disclosure, a cutting tool may include: a blade extending in a length direction of a workpiece and configured to reciprocate in the length direction of the workpiece for cutting the workpiece; at least one cutting tip provided on an end of the blade and protruding in a width direction of the blade for cutting the workpiece while making contact with the workpiece; and an auxiliary cutting structure provided on at least one side of the blade and corresponding to a width of the cutting tip so as to prevent the blade from wobbling in a slot formed in the workpiece by the cutting tip.

The auxiliary cutting structure may include at least one first auxiliary cutting tip provided on an end of the blade opposite the end of the blade on which the cutting tip is provided.

The first auxiliary cutting tip may correspond to the cutting tip, and as the blade varies in position during a cutting process, the first auxiliary cutting tip may come into contact with the workpiece.

The auxiliary cutting structure may include at least one second auxiliary cutting tip provided on each lateral side of the blade.

According to another aspect of the present disclosure, a cutting apparatus may include: a frame unit disposed at both sides of a workpiece in a cutting direction of the workpiece; and the cutting tool, wherein the cutting tool may be configured to cut the workpiece while being reciprocated by power transmitted from a driving unit disposed on a side of the frame unit.

The frame unit may include: at least one pair of pillars set up at both sides of the workpiece; an arm unit rotatably provided on the pillars; and a body provided on the arm unit to combine a plurality of cutting tools with the arm unit.

### [Advantageous Effects]

According to exemplary embodiments of the present disclosure, when a workpiece is cut with a cutting tool, blades of the cutting tool may not be deformed, thereby improving the cutting quality of the workpiece, increasing the lifespan of the cutting tool, and decreasing costs necessary for replacing, maintaining, or repairing the cutting tool.

### [Description of Drawings]

FIG. 1 is a schematic view illustrating a process of cutting a workpiece using a reciprocating cutting apparatus including a plurality of blades.
FIGS. 2A and 2B are a side view and a front view illustrating a process of cutting a workpiece with the cutting apparatus.
FIGS. 3A and 3B are a side view and a front view illustrating how a cutting tool of the cutting apparatus is deformed in a process of cutting a workpiece with the cutting apparatus.
FIG. 4 is an enlarged cross-sectional view illustrating a process of cutting a workpiece with a cutting tool of a cutting apparatus of the related art.
FIG. 5 is an enlarged cross-sectional view illustrating a process of cutting a workpiece with a cutting tool of another cutting apparatus of the related art.
FIGS. 6A to 6C are cross-sectional views sequentially illustrating cut states of a workpiece according to the deformation of the cutting tool of the cutting apparatus illustrated in FIG. 5.
FIG. 7 is a perspective view illustrating a cutting tool of a cutting apparatus according to an exemplary embodiment of the present disclosure.
FIGS. 8A and 8B are cross-sectional views illustrating a process of cutting a workpiece with the cutting tool of the cutting apparatus according to the exemplary embodiment of the present disclosure.
FIG. 9 is a perspective view illustrating a cutting tool of a cutting apparatus according to another exemplary embodiment of the present disclosure.
FIGS. 10A and 10B are cross-sectional views illustrating a process of cutting a workpiece with the cutting tool of the cutting apparatus according to the other exemplary embodiment of the present disclosure.
FIG. 11 is a perspective view illustrating a cutting tool of a cutting apparatus according to another exemplary embodiment of the present disclosure.
FIGS. 12A and 12B are cross-sectional views illustrating a process of cutting a workpiece with the cutting tool of the cutting apparatus according to the other exemplary embodiment of the present disclosure.

### [Best Mode]

Exemplary embodiments of the present disclosure will now be described in detail with reference to the accompanying drawings. The disclosure may, however, be exemplified in many different forms and should not be construed as being limited to the specific embodiments set forth herein. In the drawings, the shapes and dimensions of elements may be exaggerated for clarity, and the same reference numerals will be used throughout to designate the same or like elements.

An exemplary embodiment provides a cutting apparatus configured to cut a workpiece by contacting a cutting tool with the workpiece and reciprocating the cutting tool in cutting directions.

A reciprocating multi-blade frame gang saw may be a typical example of the cutting apparatus.

The cutting apparatus of the exemplary embodiment may include a frame unit disposed at both sides of a workpiece in a cutting direction of the workpiece, and a cutting tool configured to cut the workpiece while being reciprocated by power transmitted from a driving unit disposed on a side of the frame unit.

The frame unit may include at least one pair of pillars set up at both sides of the workpiece. For example, the pillars may be disposed at positions close to four corners of the workpiece.

An arm unit rotatable within a predetermined angle range may be provided on the pillars. A body may be provided on the arm unit for combining a plurality of cutting tools with the arm unit.

The body may fix front and rear ends of the cutting tools and may apply a constant degree of tension to the cutting tools.

The arm unit may be moved upward and downward. For example, the arm unit may be moved downward at a predetermined speed by a driving unit.

As the arm unit is rotated, the cutting tools may be intermittently brought into contact with the workpiece and cut the workpiece.

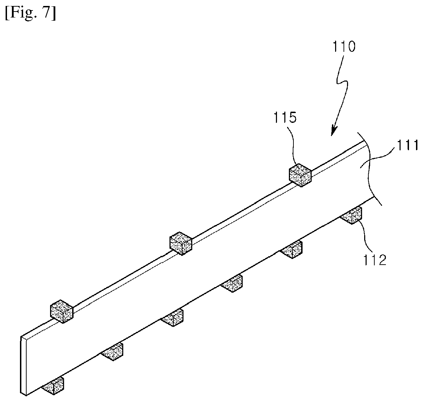

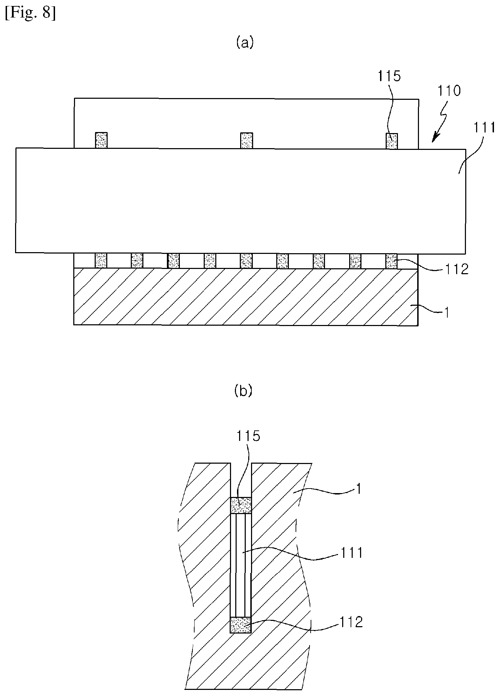

FIG. 7 is a perspective view illustrating a cutting tool 110 of a cutting apparatus according to an exemplary embodiment of the present disclosure, and FIGS. 8A and 8B are cross-sectional views illustrating the cutting tool 110 of the cutting apparatus when the cutting tool is used to cut a workpiece 1.

Referring to FIGS. 7, 8A, and 8B, the cutting apparatus may include a plurality of cutting tools 110 combined in a y-axis direction (refer to FIG. 1), and the cutting tools 110 may cut the workpiece 1 while being moved in the length direction of the workpiece 1 (x-axis direction illustrated in FIG. 1). As the cutting tools 110 cut the workpiece 1, the cutting tools 110 are lowed in the thickness direction of the workpiece 1 (z-axis direction illustrated in FIG. 1). In this manner, the cutting tools 110 may cut the workpiece 1 into a plurality of slabs.

The thicknesses of final products may be approximately calculated by subtracting the thicknesses of the cutting tools 110 from the distances between the cutting tools 110 in the y-axis direction.

In the exemplary embodiment, each of the cutting tools 110 may include a blade 111 extending in the length direction of the workpiece 1, that is, in the x-axis direction.

The blade 111 may be coupled to a body of the cutting apparatus and may be reciprocated for cutting the workpiece 1.

In addition, one or more cutting tips 112 may be provided on an end of the blade 111, that is, an end of the blade 111 making contact with the workpiece 1 in the z-axis direction. The cutting tips 112 may be brought into contact with the workpiece 1 for cutting the workpiece 1.

The cutting tips 112 protrude from the blade 111 in the width direction of the blade 111. The cutting tips 112 may contain a superabrasive and may be coupled to the blade 111 by a method such as a welding method or a bonding method. The superabrasive contained in the cutting tips 112 may include diamond, cubic boron nitride (cBN), or a general abrasive (hereinafter referred to as an abrasive). For example, the superabrasive of the cutting tips 112 may include segments formed by mixing particles of such materials with a metal bond, a resin bond, or a ceramic powder bond (hereinafter collectively referred to as a bond).

In addition, an auxiliary cutting structure corresponding to the width of the cutting tips 112 may be provided on at least one side of the blade 111.

For example, the auxiliary cutting structure may include one or more first auxiliary cutting tips 115 provided on an end of the blade 111 opposing the end of the blade 11 on which the cutting tips 112 are provided.

The first auxiliary cutting tips 115 and the cutting tips 112 may have the same width in the width direction of the blade 111.

That is, according to the exemplary embodiment, when the workpiece 1 is cut with the cutting tool 112, the workpiece 1 may be cut substantially by the cutting tips 112. In addition, the first auxiliary cutting tips 115 may be moved in a state in which the first auxiliary cutting tips 115 are restricted by both sides of a slot formed by the cutting tips 112, and thus the blade 111 may cut the workpiece 1 along a normal cutting path without wobbling or trembling.

Furthermore, according to the exemplary embodiment, since the blade 111 of the cutting tool 110 is maintained in the cutting path owing to the cutting tips 112 and the first auxiliary cutting tips 115, the deformation of the blade 111 may be minimized, and thus the lifespan of the blade 111 may be increased. In addition, since the superabrasive of the cutting tips 112 are brought into contact with the blade 111 in a vertical direction, separation of the superabrasive from the cutting tips 112 caused by abnormal contact between the superabrasive and the workpiece 1 may be prevented.

In the exemplary embodiment, the number of the cutting tips 112 and the number of the first auxiliary cutting tips 115 may be two or more, and since the first auxiliary cutting tips 115 are not actually involved in cutting, the number of the first auxiliary cutting tips 115 may be smaller than the number of the cutting tips 112.

That is, the number or arrangement of the first auxiliary cutting tips 115 may be properly determined so that the first auxiliary cutting tips 115 may prevent wobbling or trembling of the blade 111 in a state in which the first auxiliary cutting tips 115 are restricted by both sides of a slot formed by the cutting tips 112.

For example, in the exemplary embodiment, when the number of the first auxiliary cutting tips 115 is about 1/2 the number of the cutting tips 112, wobbling or trembling of the blade 111 may be prevented.

In addition, the first auxiliary cutting tips 115 are attached in such a manner that the cutting load of the cutting tool 11 may not be increased, and the number of the cutting tips 112 may be reduced according to cutting conditions.

In the exemplary embodiment, the auxiliary cutting structure includes the first auxiliary cutting tips 115 provided on an end of the blade 111, that is, the upper end of the blade 111. However, the position or shape of the auxiliary cutting structure is not limited to the exemplary embodiment. That is, the shape or number of auxiliary cutting structures may be determined to effectively prevent wobbling or trembling of the blade 111.

The first auxiliary cutting tips 115 may be attached to the end of the blade 111 by the same method as that used to attach the cutting tips 112 to the blade 111. Since the first auxiliary cutting tips 115 have a high degree of wear resistance and the same shape as the shape of the cutting tips 112, the cutting tips 112 may be used as the first auxiliary cutting tips 115. For example, the cutting tips 112 and the first auxiliary cutting tips 115 may be manufactured to have the same structure and may be interchangeably used. In addition, the first auxiliary cutting tips 115 may include a material such as a hard metal having a high degree of wear resistance.

As described above, the number of the first auxiliary cutting tips 115 may be increased within a range which doesn't increase the cutting load of the cutting tool 110. For example, the number of the first auxiliary cutting tips 115 may correspond to the number of the cutting tips 112.

Therefore, when the cutting tips 112 of the cutting tool 110 are excessively worn or it is necessary to replace the cutting tips 112 of the cutting tool 110, the blade 111 may be reversed (that is, turned upside down) so as to use the first auxiliary cutting tips 115 for cutting a workpiece 1 and the cutting tips 112 for limiting wobbling or trembling of the blade 11.

In this manner, both the cutting tips 112 and the first auxiliary cutting tips 115 of the cutting tool 110 may be used for cutting or reducing the deformation of the blade 111. That is, since both sides of the cutting tool 110 may be used, the lifespan of the cutting tool 110 may be markedly increased.

As described above, in the exemplary embodiment, the auxiliary cutting structure includes the first auxiliary cutting tips 115 provided on the upper end of the blade 111. However, the auxiliary cutting structure is not limited to the exemplary embodiment.

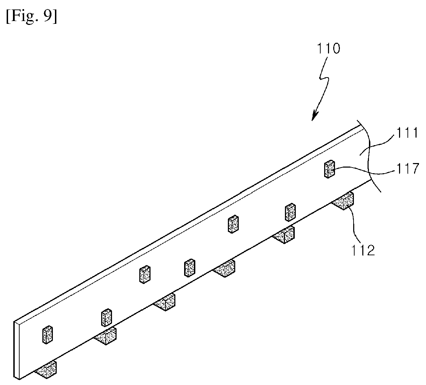

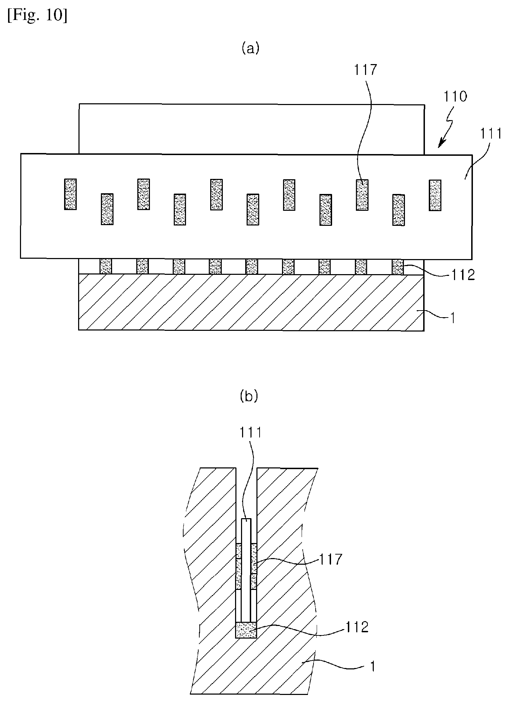

For example, the auxiliary cutting structure of the exemplary embodiment may be modified to have at least one second auxiliary cutting tip 117 provided on each lateral side of the blade 111 as illustrated in FIGS. 9, 10A, and 10B.

FIG. 9 is a perspective view illustrating a cutting tool 110 of a cutting apparatus according to another exemplary embodiment of the present disclosure, and FIGS. 10A and 10B are cross-sectional views illustrating the cutting tool 110 of the cutting apparatus when the cutting tool 110 is used to cut a workpiece 1.

Second auxiliary cutting tips 117 are attached to both lateral sides of a blade 111 and have a width corresponding to the width of cutting tips 112 extending from the blade 111. Therefore, the cutting tool 110 may be moved while being restricted by both sides of a slot formed by the cutting tips 112.

As described above, since the second auxiliary cutting tips 117 provided on both lateral sides of the blade 111 are moved while being restricted on both sides thereof by the workpiece 1, wobbling or trembling of the blade 111 may be prevented.

According to the current exemplary embodiment, although the blade 111 is not completely inserted into the slot formed by the cutting tips 112, that is, the upper end of the blade 111 is not inserted into the slot, wobbling or trembling of the blade 111 may be prevented only if the second auxiliary cutting tips 117 are inserted into the slot.

In the current exemplary embodiment, the second auxiliary cutting tips 117 may be attached to both lateral sides of the blade 111 at different heights. In this case, wobbling or trembling of the blade 111 may be prevented more effectively regardless of the position of the blade 111 in the slot.

For example, the blade 111 may have a height of 50 mm to 200 mm, and until the blade 111 is completely inserted into the workpiece 1, a cutting process may be performed at a low speed so as to prevent deformation or separation of the blade 111. A cutting time until the blade 111 is completely inserted into the workpiece 1 may be 1/3 to 1/4 the total cutting time and may be a cause of overall decreased productivity. Particularly, when a workpiece 1 such as quarried granite or marble is cut, a much longer time may be necessary for initial low-speed cutting because the workpiece 1 has an uneven surface.

However, according to the current exemplary embodiment, even though the cutting tool 110 is not completely inserted into a slot, the second auxiliary cutting tips 117 provided on both lateral sides of the blade 111 may prevent wobbling or trembling of the blade 111, and thus the initial stage of cutting may be stably performed, thereby decreasing the total cutting time.

As described above, in the cutting tool 110 of the current exemplary embodiment, the second auxiliary cutting tips 117 are provided on both lateral sides of the blade 111 as an auxiliary cutting structure. However, the shape or number of auxiliary cutting structures is not limited thereto.

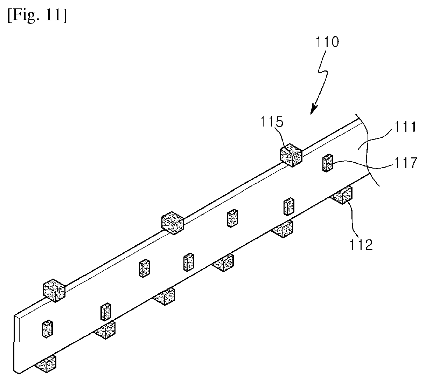

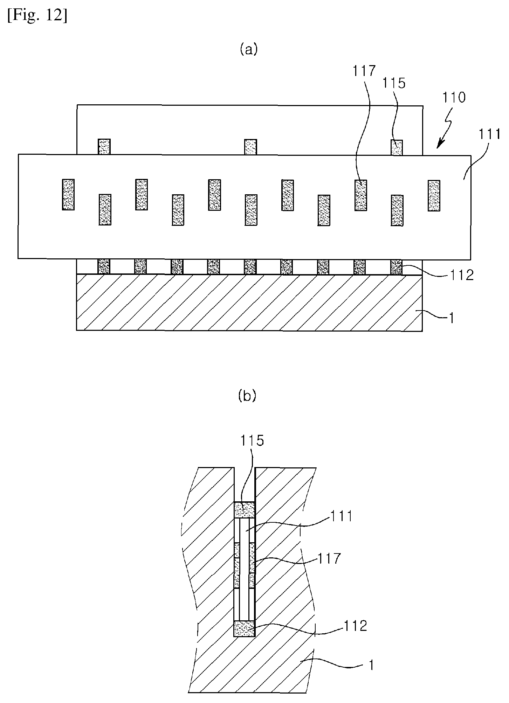

FIG. 11 is a perspective view illustrating a cutting tool 110 of a cutting apparatus according to another exemplary embodiment of the present disclosure, and FIGS. 12A and 12B are cross-sectional views illustrating the cutting tool 110 of the cutting apparatus when the cutting tool is used to cut a workpiece 1.

In the cutting tool 110 of the current exemplary embodiment illustrated in FIGS. 11 to 12B, cutting tips 112 are provided on the lower end of a blade 111, and first auxiliary cutting tips 115 are provided on the upper end of the blade 111. In addition, second auxiliary cutting tips 117 may be provided on both lateral sides of the blade 111.

In a process of cutting the workpiece 1 with the cutting tool 110, after the blade 111 is inserted to a certain extent into a slot of the workpiece 1 formed by the cutting tips 112, the second auxiliary cutting tips 117 may prevent wobbling or trembling of the blade 111. Then, when the blade 111 is completely inserted into the slot, wobbling or trembling of the blade 111 may be prevented more surely because the blade 111 is restricted in the slot by the first auxiliary cutting tip 111 and the second auxiliary cutting tip 117.

According to the current exemplary embodiment, the cutting tool 110 may make contact with the workpiece 1 from the initial stage of cutting. Therefore, a cutting groove may be previously formed in the workpiece 1 to receive the blade 111 to a certain extent.

For this, the cutting groove may be previously formed in the workpiece 1 using a circular saw having a predetermined diameter, and then the cutting tool 110 of the exemplary embodiment may be inserted so as to completely cut the workpiece 1. In a state in which the cutting tool 110 is partially inserted into the cutting groove and the blade 111 is restricted by the second auxiliary cutting tips 117, cutting of the workpiece 1 may proceed. Therefore, time necessary for initial cutting may be decreased, and thus the speed of cutting may be increased to a normal cutting speed in a very short time, thereby decreasing the total cutting time.

While exemplary embodiments have been shown and described above, it will be apparent to those skilled in the art that modifications and variations could be made without departing from the scope of the present invention as defined by the appended claims.

### [Mode for Invention]

Examples using the above-described cutting tools will now be described.

### Example 1

First, quarried Pochon granite was placed on a frame saw to which a cutting tool 110 was coupled.

The cutting tool 110 included blades 111 having a length of 3 m or greater and a height of 50 mm to 200 mm. In addition, each of the blades 111 included a plurality of diamond cutting tips 112 attached to a cutting edge thereof by silver soldering. Spacers were placed on both ends of the blades 111 to fix the blades 111.

After 4 hours from the beginning of cutting, about 20% of the blades 111 departed from cutting paths, and after 8 hours from the beginning of cutting, most of the blades 111 departed from the cutting paths.

### Example 2

Next, a granite block having a size and surface states similar to the size and surface states of a block of the Pochon granite used in Example 1 was cut. The granite block was cut after placing the granite block on a frame saw to which a cutting tool 110 was coupled.

First auxiliary cutting tips 115 were provided on the upper ends of blades 111 as an auxiliary cutting structure. The number of the first auxiliary cutting tips 115 was about 1/2 the number of cutting tips 112.

After 8 hours from the beginning of cutting, no blade 111 departed from a cutting path. After 16 hours from the beginning of cutting, the blades 111 could be moved down at a normal cutting speed.

### Example 3

Next, a granite block having a size and surface states similar to the size and surface states of a block of the Pochon granite used in Example 1 was cut. First, grooves were formed in a surface of the granite block using a large circular saw until the grooves had a depth of 100 mm to 200 mm from the lowest position of the surface of the granite block. The granite block prepared as described above was cut by placing the granite block on a frame saw to which a cutting tool 110 according to an exemplary embodiment of the present disclosure was coupled.

First auxiliary cutting tips 115 were provided on the upper ends of blades 111 as an auxiliary cutting structure. The number of the first auxiliary cutting tips 115 was about 1/2 the number of cutting tips 112.

After 4 hours from the beginning of cutting, no blade 111 departed from a cutting path. After 1 hour from the beginning of cutting, the blades 111 could be moved down at a normal cutting speed. The blades 111 could be reused, and the wear of the cutting tips 112 was 50% or less of the wear of the cutting tips 112 in Example 1.

### Example 4

Next, a granite block having a size and surface states similar to the size and surface states of a block of the Pochon granite used in Example 1 was cut. First, grooves were formed in a surface of the granite block using a large circular saw until the grooves had a depth of 100 mm to 200 mm from the lowest position of the surface of the granite block. The granite block prepared as described above was cut by placing the granite block on a frame saw to which a cutting tool 11 according to an exemplary embodiment of the present disclosure was coupled.

First auxiliary cutting tips 115 were provided on the upper ends of blades 111 as auxiliary cutting structures, and a plurality of second auxiliary cutting tips 117 were provided on both lateral sides of the blades 111.

After 4 hours from the beginning of cutting, no blade 111 departed from a cutting path. After 1 hour from the beginning of cutting, the blades 111 could be moved down at a normal cutting speed. Even though the downward movement speed of the blades 111 was increased by 30% or greater, the blades 111 did not depart from the cutting paths. The blades 111 could be reused, and the wear of the cutting tips 112 was 50% or less of the wear of the cutting tips 112 in Example 1.

## Claims

1. A cutting tool comprising:
a blade extending in a length direction of a workpiece and configured to reciprocate in the length direction of the workpiece for cutting the workpiece;
at least one cutting tip provided on an end of the blade and protruding in a width direction of the blade for cutting the workpiece while making contact with the workpiece; and
an auxiliary cutting structure provided on at least one side of the blade and corresponding to a width of the cutting tip so as to prevent the blade from wobbling in a slot formed in the workpiece by the cutting tip.

2. The cutting tool of claim 1, wherein the auxiliary cutting structure comprises at least one first auxiliary cutting tip provided on an end of the blade opposite the end of the blade on which the cutting tip is provided.

3. The cutting tool of claim 2, wherein the first auxiliary cutting tip corresponds to the cutting tip, and as the blade varies in position during a cutting process, the first auxiliary cutting tip comes into contact with the workpiece for cutting the workpiece.

4. The cutting tool of any one of claims 1 to 3, wherein the auxiliary cutting structure comprises at least one second auxiliary cutting tip provided on each lateral side of the blade.

5. A cutting apparatus comprising:
a frame unit disposed at both sides of a workpiece in a cutting direction of the workpiece; and
the cutting tool of any one of claims 1 to 3, wherein the cutting tool is configured to cut the workpiece while being reciprocated by power transmitted from a driving unit disposed on a side of the frame unit.

6. The cutting apparatus of claim 5, wherein the frame unit comprises:
at least one pair of pillars set up at both sides of the workpiece;
an arm unit rotatably provided on the pillars; and
a body provided on the arm unit to combine a plurality of cutting tools with the arm unit.
